# DEMANDE DE BREVET EUROPEEN

(11) **EP 4 651 528 A1**
(43) Date de publication de la demande: **19.11.2025**
(21) Numéro de dépôt: 25173232.7
(22) Date de dépôt: 29.04.2025
(51) Int. Cl.: H04W 4/80, H04W 12/00, H04L 69/14

(54) **ÉTABLISSEMENT DE COMMUNICATION BLE ENTRE UN BOÎTIER DE CLÉ TÉLÉCOMMANDE ET UN VÉHICULE**

(30) Priorité: 14.05.2024 FR 2404918
(71) Demandeur: Valeo Comfort and Driving Assistance, 94000 Créteil (FR)
(72) Inventeur: PETEL, Laurent, 94000 Créteil (FR)
(74) Mandataire: Delaval, Guillaume Laurent

(57) **Abrégé**

On propose un procédé de communication entre un boîtier de clé télécommande de véhicule (110) et un véhicule (120). Le boîtier de clé (110) et le véhicule (120) sont configurés pour communiquer en utilisant les protocoles de communication BLE et NFC. Le procédé comprend un appairage S10 du boîtier de clé (110) et du véhicule (120) pour le protocole de communication NFC. Le procédé comprend un échange S20, en utilisant le protocole de communication NFC, d'une clé BLE (132) entre le boîtier de clé (110) et le véhicule (120). Le procédé comprend un établissement S30 d'une communication BLE entre le boîtier de clé (110) et le véhicule (120) en utilisant la clé BLE (132) échangée. Le procédé améliore l'établissement d'une communication BLE entre le boîtier de clé télécommande (110) et le véhicule (120).

## Description

### Domaine technique

La présente divulgation concerne un procédé de communication entre un boîtier de clé télécommande de véhicule et un véhicule, un programme d'ordinateur pour un tel boîtier de clé télécommande et/ou un système de véhicule, un support de stockage pour un tel programme et un boîtier de clé télécommande configuré pour un tel procédé de communication.

### Arrière-plan technique

Les boîtiers de clé télécommande de véhicule, souvent appelés « identifiants » ou « keyfob » en anglais, sont aujourd'hui utilisés pour l'exécution de différentes fonctions par le véhicule, comme par exemple l'ouverture des portes et/ou le démarrage du véhicule lorsque l'utilisateur approche du véhicule. Pour l'exécution de ces fonctions, les boîtiers de clé sont configurés pour communiquer en utilisant plusieurs protocoles de communication avec le système. Par exemple, le boîtier de clé et le système peuvent être configurés pour communiquer en utilisant un protocole de communication NFC (acronyme de l'anglais « Near Field Communication » de la norme ISO/IEC 14443, qui signifie en français « Communication en Champ Proche ») et un protocole de communication BLE (acronyme de l'anglais « Bluetooth Low Energy », qui signifie en français « Bluetooth faible énergie »).

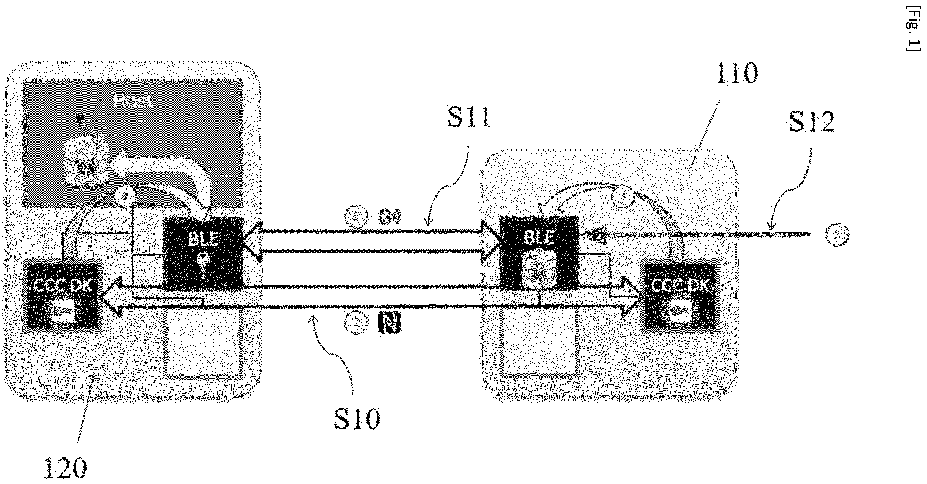

Comme illustré sur la figure 1 décrivant l'état de la technique, pour chaque protocole de communication, avant de communiquer avec ledit protocole, le boîtier de clé 110 est généralement appairé avec le véhicule 120, notamment pour sécuriser l'utilisation des fonctions. Le boîtier de clé 110 et le véhicule 120 réalisent notamment un premier appairage sécurisé S10 pour le protocole NFC et un deuxième appairage S11 pour le protocole BLE. Le deuxième appairage S11 comprend notamment l'échange sécurisé d'une clé BLE partagée entre l'identifiant et le véhicule. Une étape d'augmentation des privilèges peut être réalisée préalablement au niveau du véhicule pour que de tels appairages soient autorisés par le véhicule.

Pour le protocole NFC, l'appairage S10 est généralement moins complexe, car le protocole NFC n'est utilisable qu'à courte distance, ce qui réduit les risques en termes de sécurité, notamment d'usurpation d'identité. L'appairage NFC S10 peut être par exemple réalisé une fois que le boîtier de clé 110 est déposé sur un support situé à l'intérieur du véhicule, et qu'il est détecté sur ce support par le véhicule. Concernant le protocole BLE, celui-ci peut être utilisé à plus longue distance, notamment lorsque l'utilisateur se trouve à l'extérieur du véhicule, ce qui entraîne l'utilisation d'algorithmes d'appairage plus complexes (tels que le protocole d'échange de clés ECDH, acronyme de l'anglais « Elliptic Curve Diffie-Hellman »). En effet, ces algorithmes d'appairage incluent généralement des chiffrements de cryptographie dont l'exécution est longue. D'autre part, l'appairage BLE S11 peut notamment attendre une action S12 de l'utilisateur sur le boîtier de clé avant de se lancer. L'établissement de la communication BLE entre le boîtier de clé et le véhicule est donc plus long et complexe à réaliser. En outre, comme l'appairage BLE est réalisé préalablement à l'utilisation du protocole BLE, il fait perdre en réactivité les fonctions à réaliser qui sont exécutées ensuite à partir de la communication BLE établie.

Il existe donc un besoin d'améliorer l'établissement d'une communication BLE entre un boîtier de clé et un véhicule, en particulier d'accélérer le temps d'établissement d'une communication BLE.

### Résumé

On propose un procédé de communication entre un boîtier de clé télécommande de véhicule et un véhicule. Le boîtier de clé et le véhicule sont configurés pour communiquer en utilisant les protocoles de communication BLE et NFC. Le procédé comprend un appairage du boîtier de clé et du véhicule pour le protocole de communication NFC. Le procédé comprend un échange, en utilisant le protocole de communication NFC, d'une clé BLE entre le boîtier de clé et le véhicule. Le procédé comprend un établissement d'une communication BLE entre le boîtier de clé et le véhicule en utilisant la clé BLE échangée.

Le boîtier de clé peut comprendre une mémoire non-volatile. L'échange de la clé BLE peut comprendre un envoi, par le véhicule, et en utilisant le protocole de communication NFC, de la clé BLE au boîtier de clé, une réception, par le boîtier de clé, de la clé BLE envoyée, et, un enregistrement, par le boîtier de clé, de la clé BLE reçue sur la mémoire non volatile.

L'échange de la clé BLE peut comprend en outre, avant l'envoi de la clé BLE, un cryptage de la clé BLE. La clé BLE enregistrée peut être la clé BLE cryptée.

L'envoi peut comprendre l'envoi d'une commande d'enregistrement de la clé BLE sur la mémoire non-volatile. La commande envoyée peut être cryptée.

Le procédé peut comprendre en outre une suppression de la clé BLE enregistrée sur la mémoire non-volatile.

Le boîtier de clé peut comprendre un composant BLE. L'établissement de la communication BLE peut comprendre un réveil du composant BLE, une lecture de la clé BLE échangée par le composant BLE réveillé, et, une réalisation d'un ou plusieurs échanges BLE entre le boîtier de clé et le véhicule en utilisant la clé BLE lue.

Le véhicule peut comprendre un support. L'appairage du boîtier de clé et du véhicule pour le protocole de communication NFC peut comprendre un placement du boîtier de clé sur le support du véhicule.

On propose également un premier programme d'ordinateur pour boîtier de clé. Le premier programme d'ordinateur comprend des instructions qui, lorsque le programme est exécuté par un processeur du boîtier de clé, conduisent celui-ci à mettre en œuvre ledit procédé avec un véhicule.

On propose également un deuxième programme d'ordinateur pour système de véhicule. Le deuxième programme d'ordinateur comprend des instructions qui, lorsque le programme est exécuté par un processeur du système de véhicule, conduisent celui-ci à mettre en œuvre ledit procédé avec un boîtier de clé.

On propose également un troisième programme d'ordinateur comprenant le premier programme d'ordinateur et le deuxième programme d'ordinateur.

On propose également un support de stockage lisible par ordinateur sur lequel est enregistré le premier programme d'ordinateur, le deuxième programme d'ordinateur et/ou le troisième programme d'ordinateur.

On propose également un boîtier de clé télécommande de véhicule configuré pour effectuer des communications BLE et NFC avec un véhicule. Le boîtier de clé est configuré pour communiquer avec le véhicule selon ledit procédé.

### Brève description des figures

Des exemples non-limitants vont être décrits en référence aux figures suivantes :
La [Fig. 1] illustre un exemple de solution existante pour l'établissement d'une communication BLE.
La [Fig. 2] illustre un exemple d'organigramme du procédé.
Les [Fig. 3], [Fig. 4], [Fig. 5] et [Fig. 6] illustrent des exemples de boîtier de clé télécommande et de véhicule configurés pour exécuter le procédé.

### Description détaillée

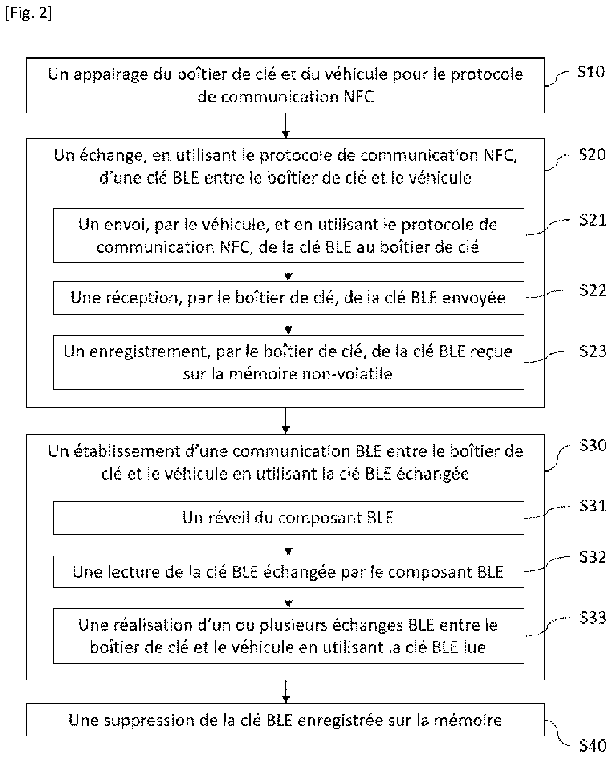

En référence à l'organigramme de la figure 2, on propose un procédé de communication entre un boîtier de clé télécommande de véhicule et un véhicule. Le boîtier de clé et le véhicule sont configurés pour communiquer en utilisant les protocoles de communication BLE et NFC. Le procédé comprend un appairage S10 du boîtier de clé et du véhicule pour le protocole de communication NFC. Le procédé comprend un échange S20, en utilisant le protocole de communication NFC, d'une clé BLE entre le boîtier de clé et le véhicule. Le procédé comprend un établissement S30 d'une communication BLE entre le boîtier de clé et le véhicule en utilisant la clé BLE échangée.

Le procédé améliore l'établissement d'une communication BLE entre le boîtier de clé télécommande et le véhicule.

En effet, le procédé permet d'établir de la communication BLE en utilisant la communication NFC déjà établie, ce qui simplifie et facilite le processus d'appairage BLE de manière sécurisée. Notamment, comme le protocole NFC n'est utilisable qu'à courte distance, le risque d'usurpation d'identité est très réduit, et l'échange de la clé BLE en utilisant le protocole NFC est donc sécurisé. En outre, en utilisant un simple échange de la clé BLE par le protocole NFC, le procédé permet d'éviter l'utilisation d'algorithme d'appairage complexe pour réaliser l'appairage BLE. L'échange de clé BLE en utilisant le protocole NFC est donc beaucoup plus rapide que l'exécution d'un algorithme plus complexe tel que le protocole d'échange de clés ECDH.

D'autre part, le procédé améliore la réactivité des fonctions à réaliser qui sont exécutées ensuite à partir de la communication BLE établie. En effet, l'échange de clé BLE est réalisé préalablement à l'utilisation du protocole BLE, et en accélérant cet échange, le procédé permet *in fine* de réduire le temps s'écoulant depuis le lancement d'une fonction qui utilise le protocole BLE et son exécution.

Le véhicule et le boîtier de clé sont configurés pour communiquer en utilisant le protocole de communication NFC (acronyme de l'anglais « Near Field Communication », qui signifie en français « Communication en Champ Proche ») et le protocole de communication BLE (acronyme de l'anglais « Bluetooth Low Energy », qui signifie en français « Bluetooth faible énergie »). Pour chaque protocole, on entend par communication des échanges, par exemple périodiques, de signaux entre le boîtier de clé et le système du véhicule selon le protocole de communication.

Le protocole de communication BLE est utilisé par le véhicule et le boîtier de clé lorsque le boîtier de clé se trouve dans un certain périmètre autour du véhicule, c'est-à-dire que les échanges utilisant ce protocole BLE (i.e. les échanges BLE) peuvent être réalisés dans ce périmètre. Ce périmètre peut comprendre toutes les positions qui se trouvent à une distance du véhicule inférieure ou égale à une distance prédéterminée (par exemple 40 mètres). Sur un plan 2D matérialisant le sol, en l'absence d'obstacle, ce périmètre peut être représenté par un cercle centré sur le véhicule et ayant un rayon égal à la distance prédéterminée.

Le protocole de communication NFC peut lui être utilisé à plus courte distance. Par exemple, le protocole NFC peut être utilisé par le véhicule et le boîtier de clé lorsque le boîtier de clé se trouve à l'intérieur du véhicule. Le véhicule peut comprendre un support à l'intérieur de l'habitacle, par exemple proche du tableau de bord à côté du conducteur. Le protocole NFC peut être utilisé lorsque le boîtier de clé se trouve à une distance inférieure à un mètre de ce support (par exemple une distance inférieure à vingt centimètres de ce support), par exemple lorsque le boîtier de clé est déposé sur ce support situé à l'intérieur du véhicule.

Les étapes du procédé peuvent être exécutées par le boîtier de clé ou par le véhicule. Alternativement, une ou plusieurs étapes peuvent être réalisées par le boîtier de clé et une ou plusieurs autres étapes par le véhicule. Dans des exemples, certaines étapes peuvent également être réalisées par les deux dispositifs ensemble (boîtier de clé et véhicule).

Dans des exemples, le véhicule peut avoir enregistré plusieurs boîtiers de clé. Dans ce cas, lorsqu'un utilisateur portant l'un de ces boîtiers de clé entre dans le véhicule, les étapes du procédé peuvent s'exécuter pour ce boîtier de clé. Par exemple, le procédé peut commencer après que l'utilisateur a placé le boîtier de clé sur le support. Lorsqu'un autre des boîtiers de clé est placé sur le support (par exemple après avoir été placé par le même utilisateur ou par un autre), le procédé peut se répéter pour cet autre boîtier de clé.

Le procédé comprend l'appairage S10 du boîtiers de clé et du véhicule pour le protocole de communication NFC. L'appairage S10 peut être réalisé une fois que l'utilisateur portant le boîtiers de clé est installé dans le véhicule. L'appairage S10 peut être réalisé de n'importe quelle manière. Par exemple, l'appairage S10 peut comprendre une étape de placement du boîtier de clé par l'utilisateur sur un support prévu à cet effet à l'intérieur du véhicule. L'appairage S10 peut ensuite comprendre une détection, par le véhicule, du boîtier de clé sur le support. L'appairage S10 peut également comprendre une identification du boîtier de clé par le véhicule, par exemple avec un enregistrement d'une référence du boîtier de clé par le véhicule. L'appairage S10 peut comprendre l'échange d'une clé NFC (clé numérique, traduction de l'anglais « Digital Key ») entre le boîtier de clé et le véhicule, par exemple enregistrée ensuite au niveau d'un élément sécurisé (composant NFC) que chaque dispositif comprend. Une fois appairés, une communication NFC entre le boîtier de clé et le véhicule est établie, et le boîtier de clé et le véhicule peuvent échanger des signaux selon le protocole NFC.

Le procédé comprend l'échange S20, en utilisant le protocole de communication NFC, d'une clé BLE entre le boîtier de clé et le véhicule. L'échange S20 est réalisé selon le protocole de communication NFC, ce qui signifie que l'échange S20 est réalisé par un échange d'un ou plusieurs signaux entre le boîtier de clé et le véhicule utilisant le protocole de communication NFC.

L'échange S20 peut être réalisé de n'importe quelle manière. Dans des exemples, l'échange S20 peut comprendre les étapes S21, S22 et S23 illustrées sur la figure 2. L'échange S20 peut comprendre un envoi S21, par le véhicule, et en utilisant le protocole de communication NFC, de la clé BLE au boîtier de clé. Par exemple, le boîtier de clé peut comprendre une mémoire non-volatile, et l'envoi S21 peut comprendre un envoi d'une commande d'enregistrement de la clé BLE sur la mémoire non-volatile. La mémoire non-volatile peut être incluse dans un élément sécurisé du boîtier de clé.

L'envoi S21 peut préalablement comprendre une génération d'une clé BLE et un enregistrement de cette clé BLE, par exemple sur une mémoire du véhicule. La clé BLE échangée peut être spécifique au boîtier de clé. La clé BLE peut être une clé de chiffrement, c'est-à-dire un paramètre utilisé en entrée d'une opération cryptographique employée au moment des échanges BLE ultérieurs. Elle peut être symétrique, et être codée sous une forme binaire (par exemple sur au moins 128 bits).

L'envoi S21 peut comprendre une émission, par le véhicule, d'un signal NFC contenant la clé BLE et/ou la commande d'enregistrement. Par exemple, l'envoi S21 peut comprendre un encodage de la clé BLE et/ou de la commande d'enregistrement dans le signal NFC, puis, une émission de ce signal NFC.

L'échange S20 peut ensuite comprendre une réception S22, par le boîtier de clé, de la clé BLE envoyée. La réception S22 peut comprendre une réception, par le boîtier de clé, du signal NFC émis par le véhicule, et, une lecture du signal NFC reçu pour décoder la clé BLE et/ou la commande d'enregistrement qui sont incluses dans ce signal NFC. Ensuite, l'échange S20 peut comprendre un enregistrement S23, par le boîtier de clé, de la clé BLE reçue. Par exemple, l'échange S20 peut comprendre un enregistrement de la clé BLE reçue sur la mémoire non-volatile du boîtier de clé. Le boîtier de clé peut être configuré pour enregistrer automatiquement la clé BLE reçue à réception d'un tel signal contenant une telle clé BLE. Lorsque l'envoi S21 comprend l'envoi d'une commande d'enregistrement de la clé BLE, le boîtier de clé peut être configuré pour exécuter cette commande afin d'enregistrer la clé BLE sur la mémoire non-volatile.

Dans des exemples, l'échange S20 de la clé BLE peut comprendre en outre, avant l'envoi de la clé BLE, un cryptage de la clé BLE. Dans ce cas, la clé BLE envoyée à l'étape S21 et reçue à l'étape S22 peut être la clé BLE cryptée. La clé BLE enregistrée peut également être dans ce cas la clé BLE cryptée. L'envoi S21 peut comprendre l'envoi d'une commande d'enregistrement de cette clé BLE cryptée sur la mémoire non-volatile. Par exemple, la clé peut être cryptée en utilisant des algorithmes de chiffrement tels que SCP03 combinant AES-128 CBC et CMAC, ou AES-128 CCM. Alternativement, la commande d'enregistrement envoyée peut être cryptée. Dans ce cas, l'échange S20 de la clé BLE peut comprendre en outre, avant l'étape S21, un cryptage de la commande d'enregistrement de la clé BLE, et l'envoi S21 peut comprendre un envoi de la commande cryptée. Par exemple, la commande peut être cryptée en utilisant des algorithmes de chiffrement tels que SCP03 (combinant AES-128 CBC et AES-128 CMAC) ou AES-128 CCM.

Dans d'autre exemples, l'échange S20 peut être réalisé différemment, et peut ne comprendre pas comprendre certaine(s) de ces étapes S21 à S23, et/ou peut comprendre une ou plusieurs autres étapes supplémentaires, et/ou une ou plusieurs étapes alternatives aux étapes S21 à S23. Par exemple, la clé BLE peut être générée par le boîtier de clé, puis, peut être envoyée par le boîtier de clé au véhicule.

Le procédé comprend ensuite l'établissement S30 de la communication BLE entre le boîtier de clé et le véhicule en utilisant la clé BLE échangée. Dans des exemples, l'établissement S30 de la communication BLE peut comprendre un réveil S31 du composant BLE. Dans ces exemples, le composant BLE peut être, avant cette étape, éteint. Par exemple, le composant BLE peut préalablement s'être automatiquement éteint après une période d'inactivité. Le réveil S31 du composant BLE peut être réalisé par l'élément sécurisé du boîtier de clé, par exemple une fois la clé BLE reçue. Alternativement, le réveil S31 du composant BLE peut être réalisé après que l'utilisateur a appuyé sur un des boutons du boîtier de clé.

Un fois le composant BLE réveillé, l'établissement S30 de la communication BLE peut comprendre une lecture S32 de la clé BLE précédemment échangée lors de l'échange NFC, par le composant BLE réveillé. Par exemple, la lecture S32 peut comprendre un envoi de la clé BLE enregistrée sur la mémoire non-volatile au composant BLE. Dans des exemples, l'envoi de la clé BLE peut comprendre l'envoi, par l'élément sécurisé, d'une commande de lecture de la clé BLE au composant BLE. De même que pour l'envoi de la clé BLE par le véhicule au boîtier de clé, la clé BLE peut être cryptée ou la commande de lecture elle-même peut être cryptée (par exemple en utilisant les mêmes algorithmes que précédemment cités). La lecture S32 peut ensuite comprendre un enregistrement de la clé BLE (par exemple avec son décryptage) sur une mémoire du composant BLE.

Après la lecture S32 de la clé BLE, l'établissement S30 de la communication BLE peut comprendre une réalisation S33 d'un ou plusieurs échanges BLE entre le boîtier de clé et le véhicule en utilisant la clé BLE lue. Chaque échange entre les deux dispositifs (boîtier de clé et véhicule) peut comprendre un cryptage d'un signal BLE par un premier des deux dispositifs en utilisant la clé BLE échangée, un envoi du signal BLE crypté par le premier des deux dispositifs au deuxième, une réception du signal BLE envoyé par le deuxième des deux dispositifs et un décodage du signal BLE reçu par le deuxième des deux dispositifs en utilisant la clé BLE échangée.

Dans d'autres exemples, l'établissement S30 de la communication BLE peut être réalisé différemment, et peut ne comprendre pas comprendre certaine(s) de ces étapes S31 à S33, et/ou peut comprendre une ou plusieurs autres étapes supplémentaires, et/ou une ou plusieurs étapes alternatives aux étapes S31 à S33. Par exemple, le composant BLE peut déjà être réveillé au moment de l'exécution de cette étape, et l'établissement S30 de la communication BLE peut directement comprendre l'étape de lecture S32 de la clé BLE échangée.

Dans des exemples, un fois la clé BLE reçue par le composant BLE, le procédé peut comprendre une suppression S40 de la clé BLE enregistrée sur la mémoire non-volatile. Par exemple, la clé BLE peut être enregistrée sur un emplacement spécifique de la mémoire non-volatile, et la suppression S40 peut comprendre une modification de la valeur enregistrée sur cet emplacement spécifique pour écraser la valeur de la clé BLE (par exemple par une valeur nulle). La suppression de la clé BLE améliore la sécurité de la communication BLE établie, puisqu'elle empêche une récupération malveillante ultérieure de la clé BLE.

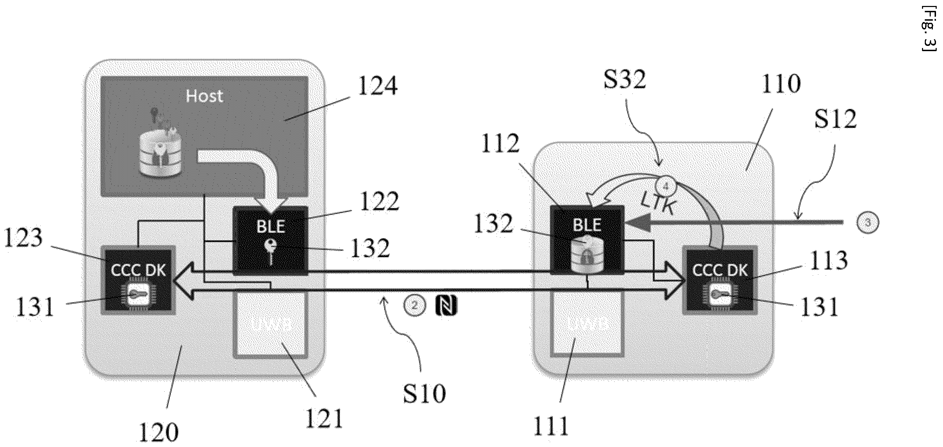

Des exemples vont maintenant être décrits en référence aux figures 3 à 6.

La figure 3 illustre un exemple de boîtier de clé 110 télécommande de véhicule configuré pour effectuer des communications BLE et NFC avec un véhicule 120. Le boîtier de clé 110 est configuré pour communiquer avec le véhicule 120 selon le procédé de la figure 2. Le boîtier de clé 110 comprend un composant UWB 111 pour réaliser une communication UWB avec le véhicule 120. Le boîtier de clé 110 comprend également un élément sécurisé 113 configuré pour réaliser la communication NFC avec le véhicule 110. L'élément sécurisé 113 peut comprendre une clé numérique 131 utilisée pour réaliser cette communication NFC avec le véhicule 110. Le boîtier de clé 110 comprend également un composant BLE 112, configuré pour réaliser des échanges BLE avec le véhicule 120.

Le véhicule 120 peut être une automobile, une moto, un camion, ou plus généralement tout véhicule terrestre. Le véhicule 120 comprend un composant BLE 122, configuré pour réaliser des échanges BLE avec le boîtier de clé 110. Le composant BLE 122 peut comprendre un émetteur-récepteur BLE. Le composant BLE 122 comprend une mémoire sur laquelle est enregistrée la clé BLE 132 échangée avec le boîtier de clé 110. Le véhicule 120 comprend un composant UWB 121 pour réaliser une communication UWB avec le boîtier de clé 110. Le véhicule 120 comprend un élément sécurité 123. L'élément sécurité 123 peut comprendre une clé numérique 131 utilisée pour réaliser la communication NFC avec le véhicule. Le véhicule 120 comprend également un composant hôte 124. Le composant hôte 124 est configuré pour générer la clé BLE 132 échangée entre le véhicule 120 et le boîtier de clé 110 et enregistrée sur le composant BLE 122. Ces différents composants du véhicule peuvent être intégrés ensemble dans un système.

L'élément sécurité 123 du véhicule 110 et l'élément sécurisé 113 du boîtier de clé 110 peuvent être configurés pour réaliser des échanges NFC après l'appairage S10 des deux dispositifs pour ce protocole de communication NFC. Notamment, l'un de ces échanges NFC peut inclure la clé BLE 132 pour réaliser l'échange de cet clé BLE 132 entre les deux dispositifs. Une fois échangée, la clé BLE 132 peut être lue S32 par le composant BLE 112. La lecture S32 de la clé BLE 132 peut comprendre l'enregistrement en mémoire de la clé BLE 132 par le composant BLE.

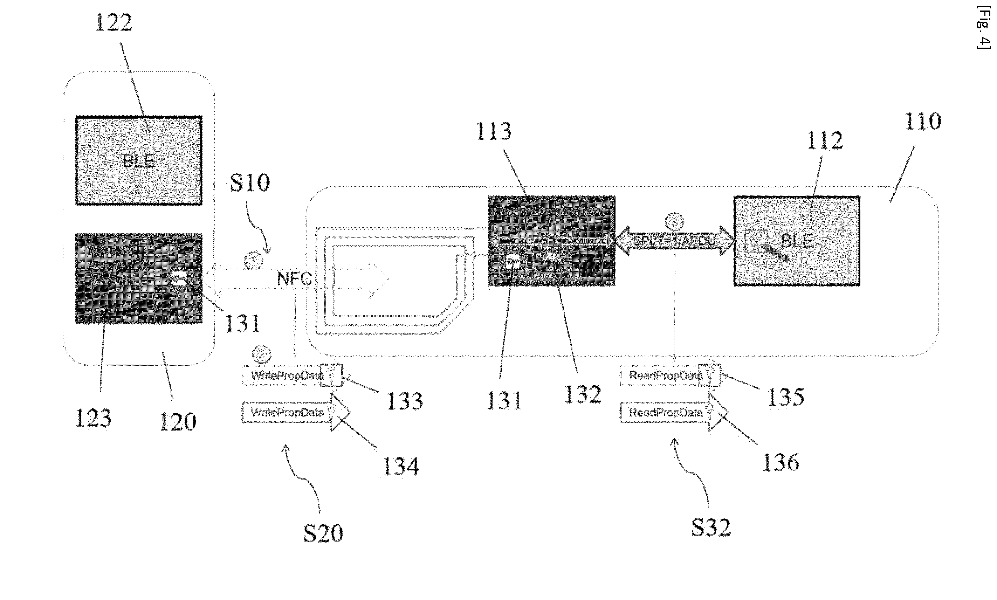

La figure 4 illustre un exemple d'implémentation du procédé par un boîtier de clé 110 et un véhicule 120. Le boîtier de clé 110 comprend un composant BLE 112 et un élément sécurisé 113. Le véhicule 120 comprend lui aussi un composant BLE 122 et un élément sécurisé 123. Le procédé comprend l'appairage S10 du boîtiers de clé 110 et du véhicule 120 pour le protocole de communication NFC. L'appairage S10 est réalisé une fois que l'utilisateur portant le boîtier de clé 110 est installé dans le véhicule 120, et un placement du boîtier de clé par l'utilisateur sur un support prévu à cet effet à l'intérieur du véhicule. L'appairage S10 comprend une détection, par le véhicule 120, du boîtier de clé 110 sur ledit support. L'appairage S10 est réalisé par l'élément sécurisé 113 du boîtier de clé et l'élément sécurisé 123 du véhicule 120, à partir d'une clé
numérique 131. Une fois appairés, une communication NFC entre le boîtier de clé et le véhicule est établie, et le boîtiers de clé 110 et le véhicule 120 peuvent échanger des signaux selon le protocole NFC.

Le procédé comprend ensuite l'échange S20, en utilisant le protocole de communication NFC, d'une clé BLE 132 entre le boîtier de clé 110 et le véhicule 120. L'échange S20 est réalisé selon le protocole de communication NFC, ce qui signifie que l'échange S20 est réalisé par un échange d'au moins un signal entre le boîtier de clé 110 et le véhicule 120 selon le protocole de communication NFC. L'échange S20 comprend l'envoi, par le véhicule 120, et en utilisant le protocole de communication NFC, d'une commande d'enregistrement de la clé BLE 132 au boîtier de clé 120 sur la mémoire non-volatile de l'élément sécurisé 113. Dans des exemples, la clé BLE envoyée peut être cryptée. Dans ce cas, la commande d'enregistrement peut ne pas être cryptée 133. Alternativement, la commande d'enregistrement envoyée peut être cryptée 134. Dans ce cas, la clé BLE de la commande d'enregistrement peut ne pas être cryptée. L'échange S20 comprend ensuite une exécution, par le boîtier de clé 110 de la commande reçue 133, 134 entraînant un enregistrement de la clé BLE 132 sur la mémoire non-volatile de l'élément sécurisé 113.

Le procédé comprend ensuite l'établissement de la communication BLE entre le boîtier de clé et le véhicule en utilisant la clé BLE échangée. L'établissement de la communication BLE comprend un réveil du composant BLE 112 puis une lecture S32 de la clé BLE 132 échangée par le composant BLE réveillé 112. La lecture S32 comprend une exécution d'une commande de lecture de la clé BLE enregistrée 132 sur l'élément sécurisé 113. De même que pour l'envoi de la clé BLE par le véhicule au boîtier de clé, la clé BLE peut être cryptée dans la commande de lecture 135, ou bien la commande de lecture elle-même peut être cryptée 136. La lecture S32 peut ensuite comprendre un enregistrement de la clé BLE 132 (par exemple avec son décryptage) sur une mémoire du composant BLE 112.

Après la lecture S32 de la clé BLE, l'établissement S30 de la communication BLE peut comprendre une réalisation d'un ou plusieurs échanges BLE entre le boîtier de clé 110 et le véhicule 120 en utilisant la clé BLE 132. Une fois la clé BLE reçue 132 par le composant BLE 112, le procédé peut optionnellement également comprendre une suppression de la clé BLE 132 enregistrée sur la mémoire non-volatile de l'élément sécurisé 113, afin d'améliorer la sécurité de la communication BLE établie.

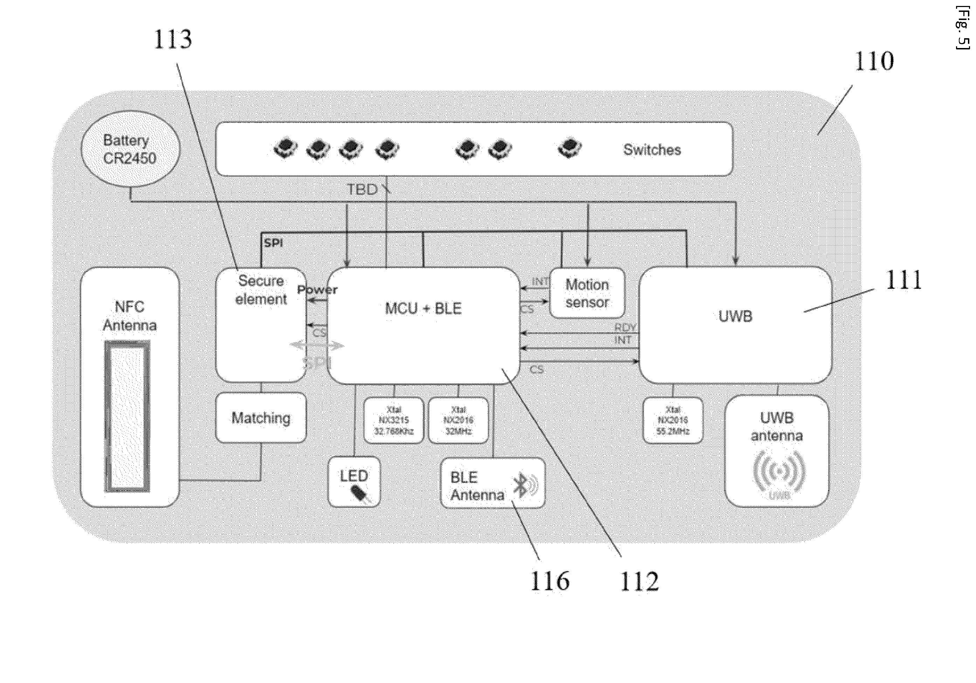

La figure 5 illustre un exemple de boîtier de clé 110 télécommande de véhicule. Le boîtier de clé 110 télécommande de véhicule, ou « identifiant », peut comprendre un boîtier protecteur englobant les composants du boîtier de clé. Le boîtier protecteur peut comprendre de la matière plastique, de la matière métallique et/ou de la matière plastique caoutchouc. Le boîtier de clé 110 peut comprendre un logo, par exemple en métal. Le logo peut être arrangé sur l'enveloppe externe du boîtier protecteur, et/ou le logo peut représenter une marque constructeur. Le boîtier de clé 110 peut comprendre à l'intérieur du boîtier protecteur un insert métallique, qui permet d'ouvrir et/ou de démarrer le véhicule 120 manuellement, par introduction et manipulation de l'insert dans une serrure respective du véhicule 120.

Le boîtier de clé 110 comprend un composant BLE 112, configuré pour réaliser des échanges BLE avec un véhicule, et comprenant par exemple un microprocesseur. Le boîtier de clé 110 comprend également une antenne 116 reliée au composant BLE 112. L'antenne 116 est configurée pour émettre ou recevoir des signaux BLE. Le microprocesseur du composant BLE 112 peut avoir en mémoire un programme d'ordinateur permettant les communications BLE, et de réaliser différentes fonctionnalités spécifiques. Le composant BLE 112 peut avoir en mémoire la clé BLE 132 échangée avec le véhicule 120. Le boîtier de clé 110 comprend également un composant UWB 111 pour réaliser une communication UWB avec un véhicule.

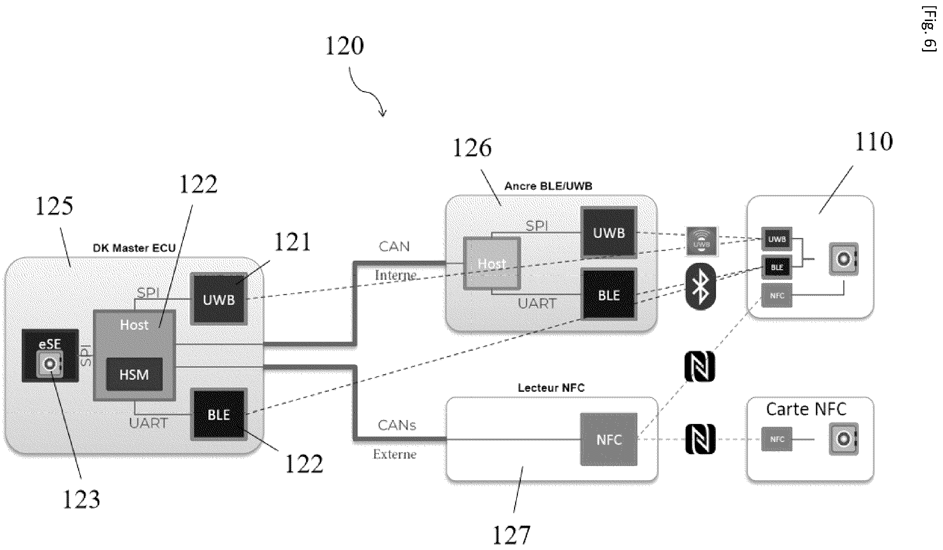

La figure 6 illustre un exemple de véhicule 120 configuré pour l'exécution du procédé. Le véhicule 120 comprend un système de véhicule 125. Le système de véhicule 125 comprend le composant BLE 122, le composant UWB 121, l'élément sécurité 123 et le composant hôte 124. Le système de véhicule 125 comprend également au moins une ancre BLE/UWB 126 comprenant chacune un composant UWB respectif et un composant BLE respectif. Chaque ancre BLE/UWB 126 est configuré pour communiquer en utilisant les protocoles de communication UWB et BLE avec le boîtier de clé 110. Le système de véhicule 125 comprend également le support situé à l'intérieur du véhicule et sur lequel le boîtier de clé 110 peut être déposé. Le support comprend un composant NFC. L'appairage NFC peut être réalisé une fois que le boîtier de clé 110 est déposé sur ce support.

## Revendications

1. Procédé de communication entre un boîtier de clé télécommande de véhicule (110) et un véhicule (120), le boîtier de clé (110) et le véhicule (120) étant configurés pour communiquer en utilisant les protocoles de communication BLE (Bluetooth Low Energy) et NFC (Near Field Communication), le procédé comprenant :
• un appairage (S10) du boîtier de clé (110) et du véhicule (120) selon le protocole de communication NFC ;
• un échange (S20), en utilisant le protocole de communication NFC, d'une clé BLE (132) entre le boîtier de clé (110) et le véhicule (120) ; et
• un établissement (S30) d'une communication BLE entre le boîtier de clé (110) et le véhicule (120) en utilisant la clé BLE (132) échangée.

2. Procédé selon la revendication 1, dans lequel le boîtier de clé (110) comprend une mémoire non-volatile (113), l'échange (S20) de la clé BLE comprenant :
• un envoi (S21), par le véhicule (120), et en utilisant le protocole de communication NFC, de la clé BLE (132) au boîtier de clé (110) ;
• une réception (S22), par le boîtier de clé (110), de la clé BLE (132) envoyée ; et
• un enregistrement (S23), par le boîtier de clé (110), de la clé BLE (132) reçue sur la mémoire non-volatile (113).

3. Procédé selon la revendication 2, dans lequel l'échange (S20) de la clé BLE (132) comprend en outre, avant l'envoi (S21) de la clé BLE (132), un cryptage de la clé BLE, la clé BLE enregistrée étant la clé BLE cryptée.

4. Procédé selon la revendication 2, dans lequel l'envoi (S21) comprend l'envoi d'une commande d'enregistrement de la clé BLE sur la mémoire non-volatile (113), la commande envoyée étant cryptée.

5. Procédé selon l'une quelconque des revendications 2 à 4, dans lequel le procédé comprend en outre :
• une suppression (S40) de la clé BLE (132) enregistrée sur la mémoire non-volatile (113).

6. Procédé selon l'une quelconque des revendications précédentes, dans lequel le boîtier de clé (110) comprend un composant BLE (112), l'établissement (S30) de la communication BLE comprenant :
• un réveil (S31) du composant BLE (112) ;
• une lecture (S32) de la clé BLE (132) échangée lors de l'étape (S20), par le composant BLE (112) réveillé ; et
• une réalisation (S33) d'un ou plusieurs échanges BLE entre le boîtier de clé (110) et le véhicule (120) en utilisant la clé BLE (132) lue.

7. Procédé selon l'une quelconque des revendications précédentes, dans lequel le véhicule (120) comprend un support (127), l'appairage (S10) du boîtier de clé (110) et du véhicule (120) pour le protocole de communication NFC comprenant :
• un placement du boîtier de clé (110) sur le support (127) du véhicule.

8. Programme d'ordinateur pour boîtier de clé (110) et/ou système de véhicule (120) comprenant des instructions qui, lorsque le programme est exécuté par un processeur, conduisent celui-ci à mettre en œuvre le procédé selon l'une quelconque des revendications 1 à 7.

9. Support de stockage lisible par ordinateur sur lequel est enregistré le programme d'ordinateur selon la revendication 8.

10. Boîtier de clé télécommande de véhicule (110) configuré pour effectuer des communications BLE et NFC avec un véhicule (120), le boîtier de clé (110) étant configuré pour communiquer avec le véhicule (120) selon le procédé de l'une quelconque des revendications 1 à 7.
